# EUROPEAN PATENT SPECIFICATION

(11) **EP 1 446 340 B1**
(45) Date of publication and mention of the grant of the patent: **03.06.2009**
(21) Application number: 02781557.0
(22) Date of filing: 20.11.2002
(51) Int. Cl.: B65G 1/04, B65G 1/137

(54) **SYSTEM FOR THE AUTOMATIC STORAGE AND WITHDRAWAL OF OBJECTS AND OBJECT TRANSFER DEVICE USED IN THE SYSTEM**
SYSTEM ZUR AUTOMATISCHEN SPEICHERUNG UND ENTNAHME VON GEGENSTÄNDEN, UND TRANSFEREINRICHTUNG FÜR GEGENSTÄNDE ZUR VERWENDUNG IN DEM SYSTEM
SYSTEME POUR L'ENTREPOSAGE ET LE RETRAIT AUTOMATIQUES D'OBJETS, ET DISPOSITIF DE TRANSFERT D'OBJETS UTILISE DANS CE SYSTEME

(30) Priority: 20.11.2001 IT BO20010701
(43) Date of publication of application: 18.08.2004
(73) Proprietor: SWISSLOG ITALIA S.p.A., 20128 Milano (IT)
(72) Inventor: GAMBARELLI, Franco, I-41042 Spezzano di Fiorano (IT); MAZZETTI, Claudio, I-41100 Modena (IT)
(74) Representative: Provvisionato, Paolo
(86) International application number: PCT/IB2002/004860
(87) International publication number: WO 2003/043912

(56) References cited:
- US-A- 4 750 633
- US-A- 5 380 139
- US-A- 5 558 483

## Description

The present invention relates to systems for automatic storage and withdrawal of objects, and was developed with particular regard to a system for the processing of orders within an automated store operating with a mobile device for transferring objects.

Stores play an essential part in the activity of any business in so far as they make it possible to keep large quantities of articles on the spot, making them available when required without the need to wait for long delivery times. In the case, for example, of a drug store within a hospital, the need to make a large number of different medicines available to the patients has significantly increased the size and range of such stores. The management of a store is based on operations of storage and retrieval of the articles contained therein, and is more or less complex, depending on the size of the store itself, the variety of articles contained therein, and the number of operations to be carried out. In order to satisfy this increasing requirement, human operators have for some time been replaced by computerised management systems actuating automatic devices capable of moving more rapidly within a store, of optimising and rendering more secure, complex operations of retrieval and/or storage.

In the field of management systems for the automatic storage and retrieval of articles, numerous automated stores operating with transfer devices of various types are in fact known. The principal functions which must be performed by such devices are those of receiving an order for the retrieval or the storage of one or more specific articles, verifying and selecting the area of the store in which to deposit or retrieve said articles, operating the necessary devices so that they move to the locations established according to a particular sequence, actuating the devices so as to withdraw or deposit every article listed in the order to be dealt with and, finally, actuating the devices so that they deposit the withdrawn articles at the outlet of the store, or return to the entry of the store to take up a new group of articles to be stored.

It very frequently occurs that the stores contain articles of dimensions and/or shapes such as to need to be grouped and stored in suitable containers disposed within racks. In a hospital store, for example, the drugs contained in single-dose packages do not exceed 50°s of the total articles, while the other packs consist of blister packs, packets, phials and the like, which must be grouped in particular containers. In this case, the operations of retrieval and/or storage may be further complicated, in so far as the management system, in addition to identifying an area of the store from which to retrieve the container, must move the latter into a "picking" area.

To improve understanding of the following description, a picking area is defined as an area of the store in which a picking operation is carried out, that is to say, an operation in which the desired article is selected from a plurality of objects contained in a first container, withdrawn from the first container and transferred to a second container.

The movement of the container from the store to a picking area clearly increases the times necessary for the retrieval of an article, even in the case where automatic devices are used instead of operators, if only owing to the outward and return journey which the container must make from the rack in which it is positioned to the picking area. For solving such problems, numerous different solutions are known in this field, each of which has sought to optimise in the most efficient manner the steps listed above.

US Patent 3.782.564, for example, illustrates a system for the storage and/or retrieval of articles in a store, comprising a mobile platform equipped with a withdrawal device and two loading areas. During an operation of retrieval of a stored article, the platform is sent into the store area in which a pallet containing said article is kept. Then, the platform loads the entire pallet in its first loading area and, by means of a transfer device, transfers the desired article into the second loading area. When this operation is completed, the platform replaces the pallet in the rack and moves to another area of the store to carry out the retrieval of a further article, or to the outlet of the store to unload the articles withdrawn up to that moment.

The main drawback of the system illustrated in the document US 3.782.564 lies in the fact that the platform remains locked in the retrieval position until the selected article is placed on the loading area and the pallet from which the withdrawal has been made is replaced in the rack. In the case where numerous retrievals of single articles must be made from a plurality of pallets in different areas of the store, this operation certainly involves long operating times.

US Patent 3.978.995, however, illustrates a system for the automatic storage and/or retrieval of articles comprising a plurality of vertical elevators on which move two groups of vehicles, each with a different function. A first group of vehicles comprises means for the retrieval of drawers disposed on racks and means for the election and withdrawal of an article contained therein, while a second group comprises only a drawer for the temporary depositing of such articles. During an article retrieval operation, each vehicle of the first group withdraws one or more articles from the containers present on the racks and deposits them in one or more vehicles of the second group. Each vehicle of the second group, when a predetermined number have been collected, transfers the articles to the outlet of the store.

The main drawback of the device illustrated in the document US 3.978.995 is that of having to pre-arrange and manage a large number of vehicles within a store system. During a retrieval operation as described above, if the withdrawals have to be carried out on a plurality of drawers, each containing also only a single object and being stored in areas remote from each other, the number of vehicles of the first and second group must increase significantly in order to satisfy such demands. Moreover, the management software for the store becomes notably complex because of the need to co-ordinate the movements of a plurality of vehicles, each with different functions.

Finally, US patent 5.380.139 discloses a method of and a system for banding variable sized loads by transferring the loads between a storage base and a transport base by engaging a portion of at least one engagement member, and displacing the engagement member to thereby pull a load onto the transport base for transport by the transport base or to push a load from the transport base onto the storage base.

It is an aim of the present invention to remedy the drawbacks of the devices of known type, by providing an automatic system which makes it possible to optimise and speed up the operations of storage and retrieval of objects.

A further aim of the present invention is that of producing a store system which is simple, economic and capable of managing large quantities of objects also in a small space.

In order to fulfil the aforesaid aims, the subject of the present invention is a system for the automatic storage and retrieval of objects, and an object transfer device used in the system as defined in the following claims.

According to a particular characteristic of the present invention, the handling means and the transfer means are connected in operation to a control unit for controlling, in use, the independent and/or simultaneous handling of the containers and the transfer of the objects.

One of the main advantages of the present invention lies in the possibility of being used in storage areas disposed in opposed rows and housing object containers of standard type.

Further characteristics and advantages will become clear from the following detailed description of a preferred exemplary embodiment, with reference to the appended drawings of a system for the automatic storage and retrieval of objects, provided purely by way of non-limiting example, wherein:
- Figure 1 ins a perspective view of a system for the automatic storage and retrieval of objects according to the present invention; and .
- Figure 2 is a perspective view of an object transfer device used in the system of Figure 1.

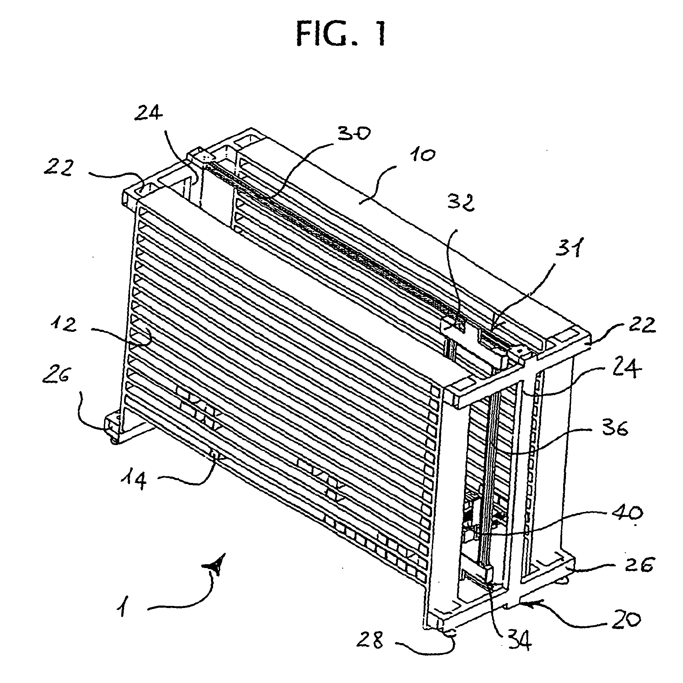

With reference now to Figure 1, an object store 1 comprises a pair of racks 10 disposed opposite and at a predetermined distance from each other. Each rack comprises a plurality of parallel shelves 12 defining between them housing areas for storage containers 14, for example, but not by way of limitation, of the drawer or box type. The whole of the shelves therefore defines a store area containing a plurality of housing areas for storage containers, each definable by two co-ordinates X, Y and by an identification parameter of the rack.

The store comprises at least one outlet area and an entry area, provided at some housing areas defined by the shelves of the racks, which can be connected in operation to container transfer systems, such as, for example, a conveyor belt system or a pneumatic despatch system, for transferring the storage containers, used within the store, to further operating stations, or for receiving containers to be used within the store.

It is of course possible also to provide more outlet and entry areas, for example two or more on each rack, as well as transfer systems different from those mentioned above, without thereby departing from the scope of the present invention.

The two racks are supported at their ends by two external frame structures 20, preferably I-shaped, each comprising a top bar 22, an upright 24 and a bottom bar 26, preferably bearing on support feet 28 for supporting the frame 20 and the racks 10. Connected to the frame structure 20, and in particular, although not by way of limitation, to the pairs of top bars 22 and bottom bars 26, are devices for moving an elevator member 31, for example rotatable belts 30, preferably closed in a ring, which extend horizontally substantially over the whole length of the racks 10, and are actuated by motive means (not illustrated).

The elevator member 31 connected to the rotatable belts 30 of the racks 10 comprises an upper carriage 32 and a lower carriage 34 and in turn comprises two vertical rails or guides 36 connected to the ends of the two carriages 32, 34. On the vertical rails or guides 36 is slidably mounted a platform 40, connected in operation to further actuating means (not illustrated), and comprising an object transfer device.

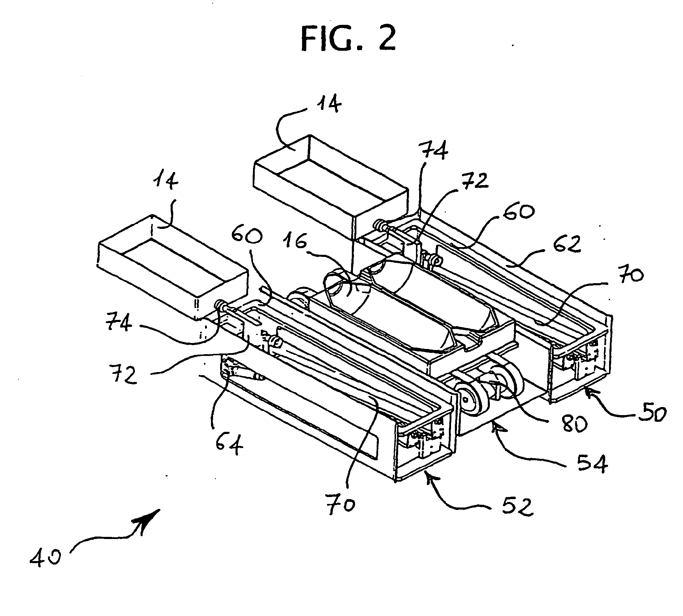

As illustrated in Figure 2, the object transfer device comprises a main structure on which at least three housing areas 50, 52, 54 for object containers are provided and which, in the non-limiting example of Figure 2, are disposed parallel to one another and have a substantially rectangular or in any case elongate shape in a direction orthogonal to the racks.

Each lateral housing area 50, 52 comprises an upper portion for receiving a container 14 and a lower portion containing container handling means to make it possible, as will become clearer hereinafter, to move the containers 14 inside and/or outside the housing areas 50, 52, and therefore to and/or from the shelves 12 of the racks 10. In particular, the upper portion of each housing area 50, 52 is defined by a perimetric base surface 60 and by two lateral walls 62 which form a sliding and housing surface for a container 14. The handling means preferably, but not by way of limitation, comprise two hydraulic cylinders 70, each with one end connected to the perimetric base surface 60 and the other end connected to a lifting device 64 fixed on the bottom of the main structure. Connected to the hydraulic cylinders 70 are two substantially L-shaped retrieval members 72 comprising at one of their ends anchorage means such as, for example, but not by way of limitation, suction cups 74. The hydraulic cylinders 70 are connected in operation to motive means (not illustrated), capable, in use, of actuating them selectively in any predetermined direction.

The central housing area 54 comprises further handling means 80, for example, rollers, or conveyor belts or handling means similar to those described above, capable of moving towards the inside and/or towards the outside of the platform 40 object collecting containers, such as, for example, but not by way of limitation, carriers for pneumatic despatches 16.

The object transfer device further comprises picking means of generally known type, such as an arm movably connected to the platform and comprising an anchorage member, for example a suction cup, at one of its ends. The picking arm is capable of withdrawing objects contained in one of the storage containers 14 housed in one of the lateral housing areas 50, 52 and depositing them in one of the collecting containers 16 housed in the central housing area 54. The picking means may of course carry out object transfer operations also between the two storage containers, and it is possible for them to comprise anchorage means different from those described, without thereby departing from the scope of the present invention.

According to a particularly advantageous characteristic of one of the embodiments of the present invention, the picking means comprise sensor means capable of detecting and selecting a predetermined article within a storage container containing a plurality of objects. In one of the embodiments, the stored articles comprise a label on which are displayed, for example, but not by way of limitation, by means of bar codes, the data relating to the object itself. The picking means, in this case, comprise an optical sensor capable of reading such data so as to allow the withdrawal means to select the desired object each time. In a simpler embodiment, in the case where every container contains the same type of object, the sensor means detect only the presence of the object within the storage container.

The system for automatic storage and retrieval of objects of one of the embodiments of the present invention further comprises control means, for example, but not by way of limitation, an electronic processor and a database for the automatic management of the storage, retrieval and general operation of the entire store. In particular, the database comprises a plurality of data concerning the store, for example, but not by way of limitation, the number and location of the racks, the location of the containers within the racks and the contents of each of them, or the number of free housing areas and their location. The database may be updated at any time, and there may be inserted into it predetermined sequences of retrieval and/or storage in the case of retrieval and/or storage orders recurring frequently. Optionally, the electronic processor may be connected to a data network, to a telephone line or to different means of communication via cable or without cable for receiving and/or communicating information about the store also by remote means.

According to a further embodiment of the present invention, the internal space of the storage containers may be subdivided by means of separator members of known type into predetermined portions, depending, for example, on the type of object stored. The information regarding such organisation of the interior of the containers may be inserted into the database to allow the withdrawal device of the present invention to select a predetermined object within the containers during the withdrawal step.

In use, when an order for the retrieval of a predetermined number of objects contained in the store arrives at a system control station, it is inserted, manually or automatically, into the electronic processor, and the system, together with the data contained in the database, proceeds to work out a sequence of retrieval operations for processing the aforesaid order.

By means of a checking process, the control unit ascertains that there is an object collecting container 16 present on the platform 40 of the elevator, in particular in the central housing area 54. In the case of a negative check result, the platform 40 is sent to the entry area of the store to load such a container 16. If the result of the check is positive, the platform 40 is sent to the first store area, identified by co-ordinates X, Y and by the identification parameter of the rack 10, to retrieve the first object of the order being processed. Depending on the number of storage containers 14 associated with the objects of the retrieval order, it is possible to envisage a different sequence of operations to be carried out in order to process such an order.

### A single storage container

Once the platform 40 is positioned so that one of its lateral housing areas 52 is opposite the storage container 14, the lifting device 64. raises the end of the hydraulic cylinder 70 disposed adjacent to one of the two racks 10 of the store 1 from which retrieval is to be effected, and the electric motor actuates the hydraulic cylinder 70 of the object transfer device, bringing the retrieval member 72 close to the lateral surface of the storage container 14. When the suction cup 74 is engaged with the aforesaid wall, the retrieval member 72 loads into the platform 40 the selected container 14, sliding it on the upper surface of the perimetric portion 60. Once the storage container 14 is completely inside the platform 40, the picking means carry out an object transfer operation, withdrawing one or more required objects from the storage container 14 and depositing them within the collecting container 16. When this operation is completed, the retrieval member 72 pushes the storage container 14 back into its housing inside the rack 12, and the lifting device 64 lowers the end of the hydraulic cylinder 70, bringing the device into its initial state. The platform 40 is then moved to the outlet area from the store, where the collecting container 16 is pushed towards the transfer means in order to be sent to following operating stations.

As an alternative to the procedure described above, and in order to optimise further the retrieval times for an article, once the storage container 14 is completely inside the platform 40, the latter is moved directly towards the outlet area of the store. During its travel, the picking means carry out the aforesaid object transfer operation, and when the platform arrives at the outlet area the collecting container 16 can be immediately pushed towards the transfer means. This operating mode allows the retrieval system of the present invention to utilise "idle times", that is to say, to take advantage of the time the platform takes to move from one area of the store to another to carry out a picking operation from the retrieved container.

### Two storage containers

Once the first storage container 14 is loaded on board the platform 40, the elevator member moves immediately towards the area of the store in which is housed a second container 14 containing other objects to be withdrawn according to the order being processed. During this displacement, the withdrawal means carry out an object transfer operation, withdrawing one or more required objects from the first storage container 14 and depositing them within the collecting container 16. In this way, when the platform 40 arrives at the second housing area of the store, positioning itself with the free lateral housing area 50 at the second storage container 14 to be retrieved, it is possible to load the second container 14 immediately on the platform 40. Then the platform 40 is moved towards the outlet area of the store, and during its travel the picking means transfer the objects from the second container to the collecting container. As before, near the outlet area of the store the collecting container is pushed towards the transfer means in order to be sent towards following operating stations. In this case also, the system uses the idle times to optimise its operation.

### Two or more storage containers

In this case, when the second storage container 14 has been loaded onto the platform 40, it is possible to operate according to at least two different modes:
a) first mode: unloading in the housing area of the second container 14 the first storage container 14, and transferring to a further store area while the picking operation is carried out on the second container; loading a further container on the platform 40, unloading the second container 14 in its place and transferring the platform 40 to the following store area, repeating this procedure until completion of the order to be processed; or
b) second mode: moving the elevator member back to the first store area while the picking operation is carried out on the second container; unloading the first container in its housing area and transferring the platform to the third store area; loading the third container on the platform and returning the second container to its original position while the picking operation is carried out on the third container, repeating this procedure until completion of the order to be processed.

Each of the two modes described above has some advantages, depending on the characteristics and dimensions of the store in which the system operates, and on the type of order to be processed, so much so that it could be the same processor which establishes each time which of the two modes to execute. The first mode (a) is particularly advantageous in terms of saving time in the case where the store is of very large dimensions and the objects to be withdrawn are contained in containers located in store areas very distant from each other. In this case the platform performs only once the movements from one area of the store to another which involve substantial consumption of time and energy. On the other hand, an operating mode of this kind significantly complicates the software for management of the positions of the containers within the store, so much so that the table of allocation of the containers which is contained in the database must be subjected to continual updating on each new positioning of the storage containers in the shelves. The second mode (b) makes it possible not to complicate the management software and may be adopted in the case of stores of small dimensions, in the case where the objects are contained in containers housed in store areas very close to one another, or in the case where the objects to be withdrawn are in such large numbers as to render the use of long idle times necessary.

According to a particularly advantageous characteristic of one of the embodiments of the present invention, the object transfer device makes it possible, in use, to load and/or unload on the platform 40 storage containers 14 housed irrespectively on one of the two racks 10 disposed opposite each other. In fact, as illustrated previously, each lateral housing area 50, 52 comprises handling devices 70 that can be lowered selectively to disappear beneath the sliding surface formed by the perimetric base surface 60 and by the two lateral walls 62. Said lowering mechanism makes it possible to select each time which transfer member 72 to raise and actuate for retrieval, in so far as the surface of the perimetric portion is always free when the device in its initial state and the housing area 50, 52 is ready to house a new container. The use of gripping means such as the suction cups 74, in addition, makes it possible to retrieve and transfer by entrainment storage containers of standard type, such as, for example, boxes, cartons or containers in general, resting directly on the shelves 12 of the racks 10, and avoids the use of engagement and lifting means which could complicate the aforesaid operations or which would make it obligatory to use storage containers of suitable shape and dimensions.

According to a further particular advantageous characteristic of one of the embodiments of the present invention, the store may be loaded automatically by taking advantage of the entry area already described previously. New containers full of objects to be stored may be transferred from outside to the entry area, and from there the elevator member may position them in free housing areas, making them available for subsequent retrieval operations.

According to a further characteristic of the present invention, because the shelves of the racks define open housing areas accessible both from the inside and the outside of the store, the store itself may be loaded directly from outside, manually or by means of a further elevator member which proceeds to insert object containers directly into free housing areas, making them available for subsequent retrieval operations. This characteristic is particularly advantageous in the case of malfunctioning and/or interruption of the entire system, in so far as it renders the storage containers equally accessible and retrievable manually from outside.

With the principle of the invention remaining the same, the embodiments and details of production of the present invention may of course vary widely with respect to what has been described and illustrated, without thereby departing from the scope of the present invention.

## Claims

1. An object transfer device, comprising:
- a support structure within which first housing areas (50, 52) are provided for housing first object containers (14);
- picking means connected to the support structure for transferring, in use, objects contained in said first containers (14);
- a plurality of handling means (70, 72, 74) engaged with the support structure, arranged to be actuated independently of one another, in use, for moving said first object containers (14) inside and/or outside said first housing areas (50, 52),
**characterised in that**
the support structure comprises at least a further housing area (54) for housing a further object container (16), the picking means transferring, in use, objects contained in said first containers (14) to said further object container (16).

2. An object transfer device according to claim 1, **characterised in that** the handling means (70, 72, 74) and the picking means are connected in operation to control means for controlling, in use, the independent and/or simultaneous handling of the containers (14), (16) and transfer of the objects.

3. An object transfer device according to claim 2, **characterised in that** it comprises sensor means for selecting, in use, an object contained within a container (14), (16).

4. An object transfer device according to claim 3, **characterised in that** it comprises further handling means (80) engaged with the support structure, arranged to be actuated for moving said further object container (16) inside and/or outside said further housing area (54).

5. A system for the storage and retrieval of objects of the type comprising a storage area (1) having a plurality of housing areas (50, 52) for object containers (14), **characterised in that** it further comprises an object transfer device as defined by claims 1 to 3.

6. A method for the retrieval and storage of objects in a system as defined by claim 5, **characterised in that** it comprises the following steps in combination with one another:
a) positioning the object transfer device opposite a container housed in a store area;
b) loading the container into the object transfer device;
c) moving the object transfer device opposite a further store area in which is housed a further container, and simultaneously transferring one or more objects from the container already loaded into the object transfer device to a collecting container housed in the object transfer device;
d) loading the further container into the object transfer device;
e) unloading the other container into a store area; and
f) repeating step c) until the transfer of all the objects is completed.

7. An object transfer device according to claims 1 to 3, **characterised in that** it comprises an object handling device comprising in combination with one another:
- a support structure within which housing areas (50, 52) are provided for housing at least two containers (14, 16);
- at least two handling means (70, 72) engaged with the support structure, arranged to be actuated independently of one another, in use, for respectively moving the object containers (14), (16) inside and/or outside the housing areas (50, 52) in different and opposed directions;
- gripping means (74) connected to the handling means (70), (72) arranged particularly for engaging with said containers (14), (16);
the housing areas (50, 52) comprising a sliding surface (60, 62) for the containers (14) and the handling means (70, 72) being arranged to be selectively lowered to disappear beneath said sliding surface (60, 62).

8. A device according to claim 7, **characterised in that** the handling means comprise actuating means arranged to be actuated selectively, in use, in opposed and different, directions in order to move the object containers (14, 16) inside and/or outside the housing areas (50,52).

9. A device according to claim 8, **characterised in that** the actuating means comprise a hydraulic cylinder (70).

10. A device according to claim 9, **characterised in that** the gripping means (74) comprise a suction cup member (74).

## Patentansprüche

1. Gegenstandtransfereinrichtung, umfassend:
- eine Trägerstruktur, innerhalb derer erste Aufnahmebereiche (50, 52) zum Aufnehmen erster Gegenstandsbehälter (14) vorgesehen sind;
- mit der Trägerstruktur verbundene Greifmittel zum Transferieren von in den ersten Behältern (14) enthaltenen Gegenständen bei Gebrauch;
- mehrere Handhabungsmittel (70, 72, 74), die mit der Trägerstruktur in Eingriff stehen und so ausgelegt sind, dass sie unabhängig voneinander bei Gebrauch betätigt werden, um die ersten Gegenstandsbehälter (14) innerhalb und/oder außerhalb der ersten Aufnahmebereiche (50, 52) zu bewegen,
**dadurch gekennzeichnet, dass**
die Trägerstruktur mindestens einen weiteren Aufnahmebereich (54) zum Aufnehmen eines weiteren Gegenstandsbehälters (16) umfasst, wobei die Greifmittel bei Gebrauch in den ersten Behältern (14) enthaltene Gegenstände zu dem weiteren Behälter (16) transferieren.

2. Gegenstandtransfereinrichtung nach Anspruch 1, **dadurch gekennzeichnet, dass** die Handhabungsmittel (70, 72, 74) und die Greifmittel in Wirkverbindung mit Steuermitteln stehen, um bei Gebrauch die unabhängige und/oder gleichzeitige Handhabung der Behälter (14, 16) und den Transfer der Gegenstände zu steuern.

3. Gegenstandtransfereinrichtung nach Anspruch 2, **dadurch gekennzeichnet, dass** sie Sensormittel umfasst, um bei Gebrauch einen innerhalb eines Behälters (14, 16) enthaltenen Gegenstand auszuwählen.

4. Gegenstandtransfereinrichtung nach Anspruch 3, **dadurch gekennzeichnet, dass** sie weitere Handhabungsmittel (80) umfasst, die mit der Trägerstruktur in Eingriff stehen und so ausgelegt sind, dass sie betätigt werden, um den weiteren Gegenstandsbehälter (16) innerhalb und/oder außerhalb des weiteren Aufnahmebereiches (54) zu bewegen.

5. System für die Lagerung und das Wiederauffinden von Gegenständen von dem Typ, umfassend einen Lagerbereich (1) mit mehreren Aufnahmebereichen (50, 52) für Gegenstandsbehälter (14), **dadurch gekennzeichnet, dass** es weiterhin eine Gegenstandstransfereinrichtung, wie durch Ansprüche 1 bis 3 definiert, umfasst.

6. Verfahren für das Wiederauffinden und die Lagerung von Gegenständen in einem System wie durch Anspruch 5 definiert, **dadurch gekennzeichnet, dass** es die folgenden Schritte in Kombination miteinander umfasst:
a) Positionieren der Gegenstandstransfereinrichtung gegenüber einem in einem Lagerbereich aufgenommenen Behälter;
b) Laden des Behälters in die Gegenstandstransfereinrichtung;
c) Bewegen der Gegenstandstrausfereinrichtung gegenüber einem weiteren Lagerbereich, in dem ein weiterer Behälter aufgenommen ist, und gleichzeitiges Transferieren eines order mehrerer Gegenstände von dem bereits in die Gegenstandstransfereinrichtung geladenen Behälter zu einem in der Gegenstandstransfereinrichtung aufgenommenen sammelnden Behälter;
d) Laden des weiteren Behälters in die Gegenstands transfereinrichtung;
e) Entladen des anderen Behälters in einen Lagerbereich und
f) Wiederholen von Schritt c), bis der Transfer aller Gegenstände abgeschlossen ist.

7. Gegenstandstransfereinrichtung nach den Ansprüchen 1 bis 3, **dadurch gekennzeichnet, dass** sie eine Gegenstandshandhabungseinrichtung aufweist, die in Kombination miteinander folgendes umfasst:
- eine Trägerstruktur, innerhalb derer Aufnahmebereiche (50, 52) zum Aufnehmen von mindestens zwei Behältern (14, 16) vorgesehen sind;
- mindestens zwei Handhabungsmittel (70, 72), die mit der Trägerstruktur in Eingriff stehen und dafür ausgelegt sind, unabhängig voneinander bei Gebrauch betätigt zu werden, um jeweils die Gegenstandsbehälter (14, 16) innerhalb und/oder außerhalb der Aufnahmebereiche (50, 52) in verschiedenen und entgegengesetzten Richtungen zu bewegen;
- mit den Handhabungsmitteln (70, 72) verbundene Greifmittel (74), die insbesondere für den Eingriff mit den Behältern (14, 16) ausgelegt sind;
wobei die Aufnahmebereiche (50, 52) eine Gleitoberfläche (60, 62) für die Behälter (14) umfassen und die Handhabungsmitteln (70, 72) dafür ausgelegt sind, selektiv abgesenkt zu werden, um unter der Gleitoberfläche (60, 62) zu verschwinden.

8. Einrichtung nach Anspruch 7, **dadurch gekennzeichnet, dass** die Handhabungsmitteln Betätigungsmittel umfassen, die so ausgelegt sind, dass sie bei Gebrauch selektiv in entgegengesetzten und verschiedenen Richtungen betätigt werden, um die Gegenstandsbehälter (14, 16) innerhalb und/oder außerhalb der Aufnahmebereiche (50, 52) zu bewegen.

9. Einrichtung nach Anspruch 8, **dadurch gekennzeichnet, dass** die Betätigungsmittel einen Hydraulikzylinder (70) umfassen.

10. Einrichtung nach Anspruch 9, **dadurch gekennzeichnet, dass** die Greifmittel (74) ein Saugnapfglied (74) umfassen.

## Revendications

1. Dispositif de transfert d'objets, comprenant :
- une structure de support à l'intérieur de laquelle des premières zones de logement (50, 52) sont prévues pour loger des premiers conteneurs d'objets (14) ;
- des moyens de triage reliés à la structure de support pour transférer, en cours d'utilisation, des objets contenus dans lesdits premiers conteneurs (14) ;
- une pluralité de moyens de manipulation (70, 72, 74) mis en prise avec la structure de support, disposés de façon à être actionnés indépendamment les uns des autres, en cours d'utilisation, pour déplacer lesdits premiers conteneurs d'objets (14) à l'intérieur et/ou à l'extérieur desdites premières zones de logement (50, 52),
**caractérisé en ce que**
la structure de support comprend au moins une zone de logement supplémentaire (54) pour loger un conteneur d'objets supplémentaire (16), les moyens de triage transférant, en cours d'utilisation, des objets contenus dans lesdits premiers conteneurs (14) vers ledit conteneur supplémentaire (16).

2. Dispositif de transfert d'objets selon la revendication 1, **caractérisé en ce que** les moyens de manipulation (70, 72, 74) et les moyens de triage sont reliés en fonctionnement à des moyens de commande destinés à commander, en cours d'utilisation, la manipulation indépendante et/ou simultanée des conteneurs et le transfert des objets.

3. Dispositif de transfert d'objets selon la revendication 2, **caractérisé en ce qu'**il comprend des moyens formant capteur destinés à sélectionner, en cours d'utilisation, un objet contenu à l'intérieur d'un conteneur.

4. Dispositif de transfert d'objets selon la revendication 3, **caractérisé en ce qu'**il comprend des moyens de manipulation supplémentaires (80) mis en prise avec la structure de support, disposés de façon à être actionnés pour déplacer ledit conteneur d'objets supplémentaire (16) à l'intérieur et/ou à l'extérieur de ladite zone de logement supplémentaires (54).

5. Système pour l'entreposage et le retrait d'objets du type comprenant une zone d'entreposage (1) présentant une pluralité de zones de logement pour conteneurs d'objets (14), **caractérisé en ce qu'**il comprend en outre un dispositif de transfert d'objets selon les revendications 1 à 3.

6. Procédé pour le retrait et l'entreposage d'objets dans un système selon la revendication 5, **caractérisé en ce qu'**il comprend les étapes suivantes associées les unes aux autres et consistant à :
a) positionner le dispositif de transfert d'objets à l'opposé d'un premier conteneur logé dans une zone d'entreposage ;
b) charger le premier conteneur dans le dispositif de transfert d'objets ;
c) déplacer le dispositif de transfert d'objets à l'opposé d'une zone d'entreposage supplémentaire dans laquelle est logé un conteneur supplémentaire, et transférer simultanément un ou plusieurs objets du conteneur déjà chargé à un conteneur collecteur logé dans le dispositif de transfert d'objets ;
d) charger le conteneur supplémentaire dans le dispositif de transfert d'objets ;
e) décharger l'autre conteneur dans une zone d'entreposage ; et
f) répéter l'étape c) jusqu'à ce que le transfert de tous les objets soit termine.

7. Dispositif de transfert d'objets, **caractérisé en ce qu'**il comprend en association les uns avec les autres :
- une structure de support à l'intérieur de laquelle des premières zones de logement (50, 52) sont prévues pour loger au moins deux conteneurs (14, 16) ;
- au moins deux moyens de manipulation (70, 72) mis en prise avec la structure support, disposés de façon à être actionnés indépendamment l'un de l'autre, en cours d'utilisation, pour déplacer respectivement les conteneurs d'objets (14, 16) à l'intérieur et/ou à l'extérieur des zones de logement (50, 52) dans des directions différentes et opposées ;
- des moyens de préhension (74) reliés aux moyens de manipulation (70, 72) disposés en particulier pour se mettre en prise avec lesdits conteneurs (14, 16) ;
les zones de logement (50, 52) comprenant une surface coulissante (60, 62) pour les conteneurs (14) et les moyens de manipulation (70, 72) étant disposées de façon à être abaissés de manière sélective pour disparaître sous ladite surface coulissante (60, 62).

8. Dispositif selon la revendication 7, **caractérisé en ce que** les moyens de manipulation comprennent des moyens d'actionnement disposés de façon à être actionnés de manière sélective, en cours d'utilisation, dans des directions opposées et différentes afin de déplacer les conteneurs d'objets (14, 16) à l'intérieur et/ou à l'extérieur des zones de logement (50, 52).

9. Dispositif selon la revendication 8, **caractérisé en ce que** les moyens d'actionnement comprennent un vérin hydraulique (70).

10. Dispositif selon la revendication 9, **caractérisé en ce que** les moyens de préhension (74) comprennent un élément formant ventouse (74).
